# EUROPÄISCHE PATENTANMELDUNG

(11) **EP 0 908 721 A1**
(43) Veröffentlichungstag der Anmeldung: **14.04.1999**
(21) Anmeldenummer: 98114960.2
(22) Anmeldetag: 08.08.1998
(51) Int. Cl.: G01N 27/406, G01N 27/417

(54) **Verfahren zur Ermittlung der Abgastemperatur und der Luft/Kraftstoff-Verhältniszahl Lambda und Sensoranordnung zur Durchführung des Verfahrens**

(30) Priorität: 14.02.1998 DE 19806110; 10.10.1997 DE 19744672
(71) Anmelder: Heraeus Electro-Nite International N.V., 3530 Houthalen (BE)
(72) Erfinder: Wienand, Karlheinz, Dr., 63741 Aschaffenburg (DE); Häfele, Edelbert, Dr., 76228 Karlsruhe (DE)
(74) Vertreter: Kühn, Hans-Christian

(57) **Zusammenfassung**

Zur Ermittlung der Abgastemperatur und der Luft/Kraftstoff-Verhältniszahl λ werden nach dem Stand der Technik in der Regel entweder zwei getrennte Sensorelemente eingesetzt oder es erfolgt die Messung der Temperatur und von λ zumindest bei Temperaturen kleiner 250°C nicht simultan. Überdies ist die gleichzeitige Messung nur bei stationären Betrieb mit hinreichender Genauigkeit möglich. Das erfindungsgemäße Verfahren und die dafür geeignete Sensoranordnung lassen es nun zu, bei geringen meßtechnischen Aufwand eine präzise Temperatur- und λ-Messung durchzuführen, insbesondere auch im instationären Fall, indem mit einem beheizbarer Sensor, der ein temperatur- und ein sauerstoffsensitives Element auf einem Trägerelement aufweist, die Messung der Abgastemperatur selbst bei niedrigen Temperaturen bei ausgeschalteter Heizung und nur im höheren Temperaturbereich gleichzeitig mit der Ermittlung von λ vorgenommen wird.

## Beschreibung

Die Erfindung betrifft ein Verfahren nach Anspruch 1 sowie eine Sensoranordnung nach Anspruch 3 und die Verwendung der Sensoranordnung.

Aus DE 38 35 852 A1 ist ein Verfahren zum Bestimmen der Abgastemperatur bekannt, bei dem der Innenwiderstand einer im Abgas angeordneten Lambda-Sonde gemessen wird. Durch Kenntnis des Zusammenhangs zwischen Innenwiderstand (Rᵢ) und Sondentemperatur (Tₛ) wird, stationäre Verhältnisse vorausgesetzt, auf die Abgastemperatur (Tₐ) geschlossen. In DE 38 35 852 A1 werden zusätzliche Möglichkeiten angegeben, den Einfluß der Gemischzusammensetzung auf die Genauigkeit der Temperaturmessung zu berücksichtigen. Das durch diesen Stand der Technik bekannte Verfahren arbeitet mit einer Genauigkeit von 0,5 Prozent. Sollen genauere Ergebnisse erzielt werden, so erfordert dies gemäß DE 38 35 852 A1 eine Vielzahl von Innenwiderstands-Temperatur-Kennlinien für jeweils unterschiedliche Lambdawerte. Darüberhinaus gehen die Betriebsbedingungen in den rechnerischen Zusammenhang von Tₛ und Tₐ ein.

DE 43 39 692 A1 gibt ein gattungsgemäßes Verfahren zur Ermittlung der Ahgastemperatur mit einer elektrisch beheizten Lambdasonde an, wobei durch die jeweilige elektrische Leistung, die notwendig ist um die Lambdasonde auf einer konstanten Temperatur zu halten, auf die Abgastemperatur geschlossen wird. Bei annähernd konstantem Abgasdurchfluß kann die Abgastemperatur damit direkt ermittelt werden. Ändert sich jedoch der Abgasdurchfluß je nach Betriebszustand der Verbrennungsanlage, so muß für den jeweiligen Betriebszustand eine Kennlinie aufgezeichnet werden, die in der Zusammenschau ein Kennfeld ergeben. Auch andere den Betriebszustand und damit die Meßungenauigkeit der Sensoren beeinflussende Parameter müssen bei der Ermittlung der Abgastemperatur berücksichtigt werden. Beispielsweise besteht ein Zusammenhang zwischen der Drehzahl und dem Abgasdurchfluß, so dass auch hier ein Kennfeld für die Bestimmung der Abgastemperatur über die elektrische Leistung und die Drehzahl zu verwenden ist. Weitere Parameter können der Drosselklappenwinkel oder der Saugrohrdruck sein. Aus der Vielzahl der möglichen Einflußparameter ergibt sich, dass eine hohe Genauigkeit mit diesen Verfahren nicht zu erwarten ist.

In der DE 43 20 881 wird die Kombination einer beheizten Lambda-Sonde mit sprungförmiger Sensoracharakteristik mit einer weiteren λ-Sonde mit stetiger Charakteristik beschrieben. Durch die räumliche Nähe der beiden Sensorelemente kann das stetige Signal mittels des sprungförmigen Signals bei bekannter Sondentemperatur kalibriert werden. Der zusätzlich aufgebrachte elektronenleitende Temperatursensor dient der Messung der Sondentemperatur zwecks Regelung der Temperatur auf ein konstantes Niveau. Eine Berechnung der Abgastemperatur analog zu den Verfahren aus DE 38 35 852 A1 sowie DE 43 39 692 A1 ist hier nicht beschrieben. Das bei DE 38 35 852 A1 sowie DE 43 39 692 A1 betrachtete temperatursensitive Element ist der Innenwiderstand des ionenleitenden Elektrolyten. Der Innenwiderstand des Elektrolyten ist jedoch erst bei höheren Temperaturen im Bereich meßbarer Widerstände. Die Messung von Abgasen im Bereich 0 bis 250°C ist nicht möglich.

Aufgrund von Polarisationserscheinungen ist die Messung des Innenwiderstands mit großem meßtechnischen Aufwand verknüpff. Die dort vorgeschlagenen λ-Sonden sind hinsichtlich ihrer Geometrie sehr ungünstig, da, bedingt durch die geringe Eintauchtiefein das Abgasrohr, nur die Randströmung erfaßt und das Meßergebnis durch die Temperatur des Abgasrohres stark verfälscht wird.

Es ist Aufgabe der vorliegenden Erfindung ein Verfahren und eine geeignete Sensoranordnung zur Ermittlung der Abgastemperatur und von Lambda anzugeben, die eine präzise Temperaturmessung über dem gesamten Temperaturbereich und bei unterschiedlichen Betriebsbedingungen, insbesondere auch im instationären Fall, mit geringem meßtechnischen Aufwand erlaubt.

Die vorstehende Aufgabe wird erfindungsgemäß für das Verfahren durch die kennzeichnenden Merkmale des Patentanspruchs 1, für eine entsprechende Sensoranordnung durch die kennzeichnenden Merkmale des Patentanspruchs 3 gelöst, wobei der Sensor mit seinem temperatursensitiven und sauerstoffsensitiven Element mindestens 20 % in die Tiefe eines Katalysatorkörpers oder eines Abgasrohres an einer Stelle nach dem Katalysator eintaucht und dabei die Messung der Abgastemperatur bei ausgeschalteter Heizung und nur bei einer Abgastemperatur größer 250°C gleichzeitig mit der Sauerstoffmessung bzw. der Ermittlung von Lambda erfolgt.

Vorteilhafte Ausgestaltungen und Weiterbildungen der Erfindung sind in den Unteransprüchen 2 und 4 bis 11 enthalten.

Vorteilhafterweise wird die Ermittlung von Lambda mittels eines potentiometrischen (ohne Spannungsquelle), amperometrischen oder resistiven Meßverfahrens ausgeführt.

Für die Sensoranordnung hat es sich als zweckmäßig erwiesen, das temperatursensitive Element und das sauerstoffsensitive Element in Dünn-oder/und Dickschichttechnik auf einem elektrisch isolierenden Träger, beispielsweise Aluminiumoxid, oder auf einer elektrisch isolierenden Schicht aufzutragen, wobei das temperatursensitive Element von einem elektronenleitenden oder halbleitenden Material gebildet wird.

Als elektronenleitendes Material wird ein Platingruppenmetall, insbesondere Platin oder eine Platinlegierung eingesetzt. Je nach konkreter Ausführung kann ein Platin-Widerstandselement mit PTC-Charakteristik (positiver Temperaturkoeffizient) oder beispielsweise ein Pt/PtRh-Thermoelement vorteilhaft sein.

Alternativ hat es sich auch bewährt halbleitende Thermistoren auf der Basis von Aluminium-, Chrom- und/oder Eisenoxid zu verwenden, die eine NTC-Charakteristik (negativer Temperaturkoeffizient) zeigen.

Was das sauerstoffsensitive Element betrifft, so hat sich dafür, soweit das potentiometrische oder amperometrische Meßprinzip angewendet wird, ZrO₂ als Material bewährt. Für resistive Sensoren sollen perowskitische Halbleitermaterialien, insbesondere Titanate eingesetzt werden.

Anspruch 12 betrifft die Verwendung der Sensoranordnung nach Anspruch 3 in einem Verfahren gemäß Anspruch 1, wobei das Verfahren sich besonders dafür eignet zur Überprüfung der Funktionsfähigkeit eines Katalysators herangezogen zu werden, indem beispielsweise die bei der katalytischen Umsetzung von Abgasbestandteilen entstehende Wärmetönung mit dem Temperatursensor erfaßt wird und die Intensität dieser Warmetönung ein Maß für den Umsetzungsgrad des Katalysators ist. Weiterhin kann die ermittelte Abgastemperatur oder/und der ermittelte λ-Wert mit einem Temperatur- bzw. λ-Wert eines weiteren im Abgasstrom eingebauten Temperatur- oder λ-Sensors verglichen und/oder zu deren Kalibration verwendet werden. Im Einzelnen ist mit der erfindungsgemäßen Sensoranordnung als Vergleichsmessung die Kalibration eines ersten λ-Sensors mit einem zweiten λ-Sensor im heißen Betriebszustand (warmgelaufener Motor), die sogenannte On-Board-Diagnose des Katalysatorfunktion mittels Messung der Temperaturdifferenz zweier Temperatursensoren (während heißem Betrieb) und die Kalibration zweier Temperatursensoren bei Raumtemperatur (Abgleich auf gleiche Temperatur) durchzuführen.

Die Erfindung wird im folgenden anhand der Zeichnung näher erläutert. Dabei zeigt
- Figur 1a und 1b: eine Draufsicht auf Vorder- (Fig.1a) und Rückseite (Fig.1b) einer Sensoranordnung, wobei die Vorderseite perspektivisch abgebildet ist;
- Figur 2: ein Schittbild eines Sensorgehäuses mit der Sensoranordnung nach Fig. 1a und 1b.

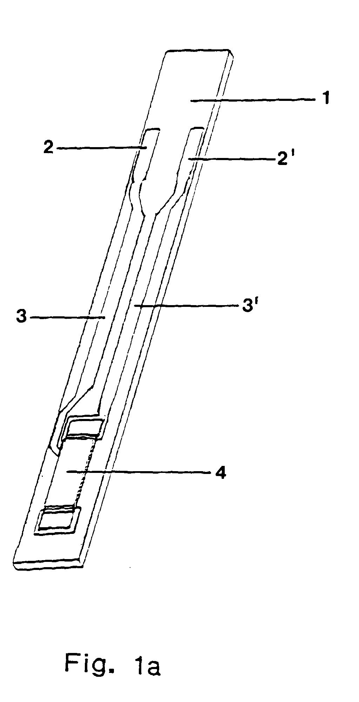

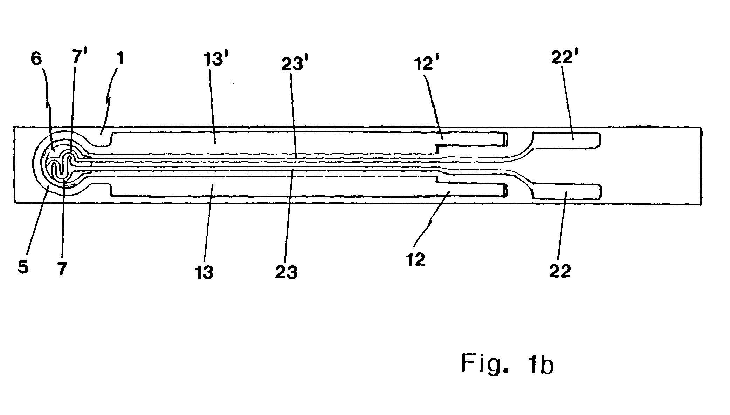

Die Figur 1 a zeigt die Vorderseite eines als flaches Stäbchen ausgebildetenTrägerelementes 1 aus Al₂O₃, auf dem an einem Ende zwei Kontaktpads 2, 2' angeordnet sind. Von diesen Kontaktpads 2, 2' führt je eine Zuleitung 3, 3' zum anderen Ende des Trägerelementes, wo ein Meßwiderstand aufgebracht und mit den Zuleitungen 3, 3' kontaktiert ist. Als Meßwiderstand wird ein Pt 200 Widerstand verwendet, der hier als temperatursensitives Element 4 dient. Figur 1b zeigt die Rückseite des Trägerelementes 1, auf der ein Heizelement 5 mit zugeordneten Zuleitungen 13, 13' sowie den Kontaktpads 12, 12', und ein sauerstoffsensitives Element 6 in Form einer Schicht aus SrTiO₃ aufgebracht sind. Auf dem als Schicht ausgebildeten sauerstoffsensitiven Element 6 sind zwei edelmetallhaltige Elektroden 7, 7' angeordnet, deren Zuleitungen 23, 23' zu den Kontaktpads 22, 22' führen. Die Schicht 6 stellt zusammen mit den beiden Elektroden 7, 7' einen resistiven Lambdasensor dar. Mit der Sensoranordnung gemäß Figur 1a und 1b kann gleichzeitig die Abgastemperatur und der Sauerstoffpartialdruck im Abgas ermittelt werden.

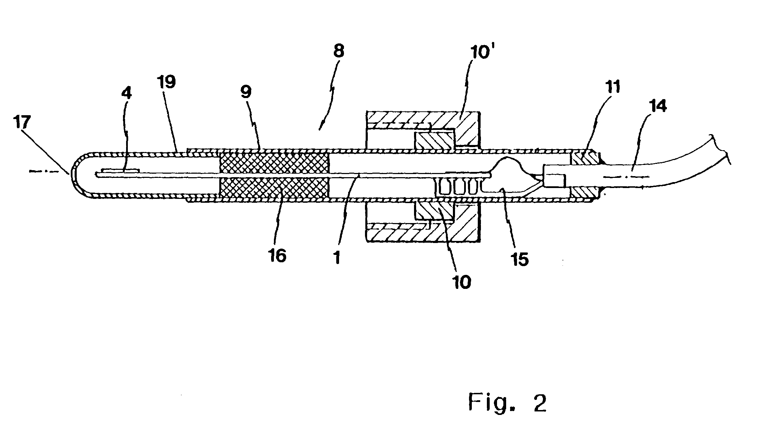

In Figur 2 ist ein Schnitt durch ein Sondengehäuse 8 dargestellt, das im Innern die erfindungsgemäße Sensoranordnung auf dem Trägerelement 1 aufweist. Das Gehäuse 8 umfaßt ein metallisches Schutzrohr 9 mit einer Schutzkappe 19, die in das Meßgas eintaucht, einen Anschlagbund 10 für eine Überwurfmutter 10', eine Dichtung 11, einen Kabelanschluß 14, Kontaktklipps 15 und im Innern des Schutzrohres 9 zur Abstützung des Trägerelementes 1 hochtemperaturfeste Dämpfungspolster 16. Die Schutzkappe 19 weist mindestens eine Gaszutrittsöffnung 17 auf, die hier als Loch an der Spitze der Schutzkappe 19 ausgebildet ist. Der Einbau in ein derartig ausgebildetes Gehäuse hat sich insbesondere für die Verwendung der Sensoranordnung in einem Verfahren zur Abgasmessung im Abgasstrang von Kraftfahrzeugen bewährt.

## Patentansprüche

1. Verfahren zur Ermittlung der Abgastemperatur und der Luft/Kraftstoff-Verhältniszahl Lambda mit einem beheizbaren Sensor, der auf einem elektrisch isolierenden Träger oder einer elektrisch isolierenden Schicht ein temperatursensitives (4) und ein sauerstoffsensitives Element (6) aufweist, dadurch gekennzeichnet, daß die Messung der Abgastemperatur bei ausgeschalteter Heizung und nur bei einer Abgastemperatur größer 250°C gleichzeitig mit der Ermittlung von Lambda erfolgt.

2. Verfahren zur Ermittlung der Abgastemperatur und der Luft/Kraftstoffverhältniszahl Lambda nach Anspruch 1, dadurch gekennzeichnet, daß die Ermittlung von Lambda mittels eines resistiven, potentiometrischen oder amperometrischen Meßprinzips erfolgt.

3. Sensoranordnung zur Durchführung des Anspruchs nach Anspruch 1 oder 2, dadurch gekennzeichnet, daß der Sensor mit seinem temperatursensitiven (4) und sauerstoffsensitiven Element (6) mindestens 20% in die Tiefe eines Katalysatorskörpers oder eines Abgasrohres an einer Stelle nach einem Katalysator eintaucht.

4. Sensoranordnung nach Anspruch 3, dadurch gekennzeichnet, daß das temperatursensitive Element (4) von einem elektronenleitenden oder halbleitenden Material gebildet wird, das in Dünn- oder/und Dickschichttechnik auf einem elektrisch isolierenden Träger oder einer elektrisch isolierenden Schicht aufgebracht ist.

5. Sensoranordnung nach Anspruch 3 oder 4, dadurch gekennzeichnet, daß das temperatursensitive Element (4) mit elektronenleitendem Material ein Widerstandselement mit PTC-Charakteristik ist oder ein Thermoelement, und daß das temperatursensitive Element (4) mit halbleitendem Material ein Thermistor ist.

6. Sensoranordnung nach einem der Ansprüche 3 bis 5, dadurch gekennzeichnet, daß das elektronenleitende Material des temperatursensitiven Elementes (4) ein Platingruppenmetall enthält.

7. Sensoranordnung nach Anspruch 6, dadurch gekennzeichnet, daß das Platingruppenmetall Platin oder eine Platinlegierung ist.

8. Sensoranordnung nach Anspruch 4 oder 5, dadurch gekennzeichnet, daß für den halbleitenden Thermistor ein keramisches Material mit NTC-Charakteristik verwendet wird.

9. Sensoranordnung nach Anspruch 8, dadurch gekennzeichnet, daß keramische Material des Thermistors aus Aluminium-, Chrom-, und/oder Eisenoxid gebildet wird.

10. Sensoranordnung nach Anspruch 3, dadurch gekennzeichnet, daß das sauerstoffsensitive Element (6) von einem im wesentlichen ZrO₂ enthaltenden Material gebildet wird und nach dem potentiometrischen oder amperometrischen Meßprinzip arbeitet.

11. Sensoranordnung nach Anspruch 3, dadurch gekennzeichnet, daß das sauerstoffsensitive Element (6) von perowskitischen Halbleitermaterialien, insbesondere von Titanaten gebildet wird und nach dem resistiven Meßprinzip arbeitet.

12. Verwendung der Sensoranordnung nach Anspruch 3 in einem Verfahren nach Anspruch 1 zur Überprüfung der Funktionsfähigkeit eines Katalysators und/oder zur Kalibrierung weiterer Sensoren im Abgasstrom gleicher Zusammensetzung.
